# EUROPÄISCHE PATENTANMELDUNG

(11) **EP 4 827 133 A1**
(43) Veröffentlichungstag der Anmeldung: **21.10.2026**
(21) Anmeldenummer: 26171134.5
(22) Anmeldetag: 08.04.2026
(51) Int. Cl.: H04W 4/80, A63B 21/00, A63B 24/00

(54) **VERFAHREN UND VORRICHTUNG ZUR DURCHFÜHRUNG EINER FITNESSÜBUNG**

(30) Priorität: 09.04.2025 DE 102025001203
(71) Anmelder: MP Sports Coaching and Consulting GmbH, 80796 Munich (DE)
(72) Erfinder:
(74) Vertreter: Savic, Bojan

(57) **Zusammenfassung**

Die Erfindung betrifft ein System, umfassend eine Smartphonehalterung, ein an der Smartphonehalterung angebrachtes Übertragungsmittel, das einem Smartphone automatisch einen Deeplink übermittelt und dadurch eine Verbindung zwischen einem Cloud-Server und dem Smartphone herstellt, sobald der Benutzer das Smartphone in die Smartphonehalterung anordnet, sowie ein analoges Fitnessgerät ohne eigene elektronische Komponenten, das mit der Smartphonehalterung zusammenwirkt.

## Beschreibung

### Technisches Gebiet

Die vorliegende Erfindung betrifft ein Verfahren und ein System zur Durchführung von Fitnessübungen, insbesondere ein System, das die Interaktion zwischen analogen Fitnessgeräten ohne eigene digitale Komponenten und cloudbasierten Trainingsplattformen ermöglicht.

### Stand der Technik

In der gegenwärtigen Fitnesslandschaft sind viele moderne Fitnessgeräte mit integrierten Displays ausgestattet und können mit Computern kommunizieren. Dies ermöglicht die visuelle Anzeige von Übungen sowie die Anpassung von Trainingsparametern, entweder lokal am Gerät oder über Wi-Fi und Internet zu einem entfernten Server. Beispiele hierfür finden sich bei Herstellern wie Egym, Milon oder Technogym.

Im Gegensatz dazu sind viele ältere analoge Fitnessgeräte - klassische Maschinen mit Steckgewichten, Plateloaded Fitnessgeräte, Seilzüge, Kurzhanteln, Langhanteln, Kettlebells, Hartschaumrollen, Schwingstäbe, Gummibänder, Hantelbänke, Medizinbälle, Gymnastikbälle und Matten - nicht für die digitale Kommunikation ausgelegt und können diese modernen Funktionen nicht nutzen.

Im Stand der Technik sind verschiedene Ansätze bekannt, die versuchen, Fitnessgeräte mit digitalen Systemen zu verbinden:
Aus KR 20170028516 A (FOURK) ist ein System bekannt, bei dem ein NFC-Aufkleber an einem Fitnessgerät angebracht ist. Wenn ein Nutzer sein Smartphone auf das Fitnessgerät legt, startet die Health-App des Smartphones automatisch und liest die im NFC-Aufkleber gespeicherten Geräteinformationen aus (z.B. Gerätetyp, Name und Adresse des Fitnessstudios). Anhand dieser Informationen aktiviert die App die Kamera des Smartphones und misst die Bewegungsintensität des Trainingsgeräts in Echtzeit anhand der Kamerabilder. Trainingsdaten können nachträglich, z.B. einmal täglich, an einen Server übertragen werden. Eine Kommunikation zwischen dem Smartphone und einem Server vor oder während der Übung findet nicht statt. Der NFC-Aufkleber gemäß KR 20170028516 A überträgt lediglich statische Geräteinformationen.

Aus US 8 744 605 B2 (SU et al.) ist ein Trainingscoach-System für Handheld-Geräte bekannt. Das Handheld-Gerät wird auf eine Plattform des Fitnessgeräts gelegt, die einen NFC-Sensor enthält. Durch NFC-Kommunikation identifizieren sich Handheld-Gerät und Fitnessgerät gegenseitig, woraufhin das Coaching-Programm auf dem Handheld-Gerät automatisch startet. Der Server ist dabei mit dem Fitnessgerät verbunden, nicht mit dem Handheld-Gerät; eine direkte Kommunikation zwischen Handheld-Gerät und Server ist ausdrücklich ausgeschlossen.

Aus US 2015/0157895 A1 (TECHNOGYM SPA) ist ein System bekannt, bei dem ein tragbares elektronisches Gerät in das Gehäuse einer Trainingsmaschine eingelegt wird, die eine NFC-Schnittstelle umfasst. Ein entfernter elektronischer Prozessor (Server) ist dazu konfiguriert, mit dem tragbaren Gerät oder direkt mit der Trainingsmaschine auf der Grundlage eines Benutzeridentifikationscodes Trainingsdaten über einen Fernkommunikationskanal auszutauschen. Die Kommunikation zwischen dem Smartphone und dem Server vor oder während der Übung ist nicht vorgesehen.

Aus BR 10 2018 011833 A2 (WE CARE FITNESS) ist ein System mit einer Halterung für Fitnessgeräte bekannt, die Platz für ein Smartphone bietet, sowie ein Cloud-Software-System zur Entgegennahme, Speicherung und Verarbeitung von Trainingsinformationen. Das System ermöglicht zwar die Erfassung von Trainingszeit, -häufigkeit und -übungen und deren Abgleich mit einem Trainingsplan.

Aus US 2021/0174268 A1 (CAMPUS FITNESS SOLUTIONS) ist ein System zur Verwaltung von Trainingsgeräten bekannt, das ein mobiles Nutzergerät zur NFC-Kommunikation und eine mobile Applikation umfasst. Der Server kann entfernt, z.B. in einer Cloud-Architektur, betrieben werden. Die mobile Anwendung kann gestartet werden, sobald der Smart-Tag durch das mobile Gerät aktiviert wird. Der NFC-Tag übermittelt keinen Deeplink, der eine direkte Kommunikation zwischen dem Smartphone und dem Cloud-Server ermöglicht.

Aus DE 10 2017 112 221 B3 (ANDES) ist ein Trainingssystem mit einem Beschleunigungssensor, einer Auswertungseinheit und einer Funkschnittstelle (NFC/RFID/Bluetooth) bekannt. Die NFC-Schnittstelle dient der Nutzeridentifikation durch Annähern eines Smartphones. Die Auswertungseinheit berechnet Trainingswerte (Position, Geschwindigkeit, Kraft, Leistung) anhand der Beschleunigungsdaten und sendet diese in Echtzeit an das Smartphone als Anzeigegerät. Das Trainingsgerät weist bevorzugt eine Halterung für das Smartphone auf, die die Funkschnittstelle enthält. Trainingsdaten werden auf einem Datenbankserver gespeichert.

Aus US 12 131 815 B2 (LUMOS HOLDINGS) ist ein Trainingsüberwachungssystem bekannt, das einen Trainingsgeräte-Identifikator (exercise machine identifier), der ein NFC- oder RFID-Signal mit der Geräteidentität sendet, sowie eine Halterung (holder) für das Smartphone während des Trainings umfasst. Der Nutzer meldet sich durch aktives Antippen des Identifikators mit dem Smartphone an (Login). Die Halterung enthält einen Näherungssensor und eine BLE-Schnittstelle; sie sendet beim Entnehmen des Smartphones ein Signal an den Server, das den automatischen Logout auslöst. Der Server leitet Trainingsdaten (Wiederholungen, Gewicht) in Echtzeit an das Smartphone weiter. Das System setzt digitale Trainingsgeräte mit eigener Elektronik voraus; es eignet sich nicht für analoge Fitnessgeräte ohne eigene elektronische Komponenten.

Ausgehend von dem vorstehend beschriebenen Stand der Technik liegt der vorliegenden Erfindung die Aufgabe zugrunde, ein System und ein Verfahren bereitzustellen, die es ermöglichen, analoge Fitnessgeräte ohne eigene digitale Komponenten (und ohne Stromversorgung) nahtlos und ohne aktive Benutzerinteraktion mit cloudbasierten Trainingsplattformen zu verbinden, um dem Benutzer gerätespezifische Übungsanleitungen, Trainingshistorie und Leistungsdaten unmittelbar beim Beginn der Übung auf seinem Smartphone bereitzustellen.

Diese Aufgabe wird durch das System nach Anspruch 1, das Verfahren nach Anspruch 10 sowie die Smartphonehalterung nach Anspruch 22 gelöst. Vorteilhafte Ausgestaltungen ergeben sich aus den Unteransprüchen.

Das erfindungsgemäße System umfasst folgende Komponenten, die zusammenwirken:
ein analoges Fitnessgerät, dem eine Smartphonehalterung zugeordnet ist, sowie ein Smartphone, wobei die dem analogen Fitnessgerät zugeordnete Smartphonehalterung ein Übertragungsmittel umfasst, das an der Smartphonehalterung angebracht ist und dazu eingerichtet ist, bei Unterschreiten einer vorbestimmten Distanz zwischen Smartphone und Smartphonehalterung einen Deeplink an das Smartphone zu übertragen, wodurch automatisch - d.h. ohne manuelle Benutzereingabe - eine Verbindung zwischen einem Cloud-Server und dem Smartphone hergestellt wird, sobald eine gewisse Entfernung zwischen dem Smartphone und der Smartphonehalterung unterschritten wird. Auf dem Server kann eine Trainingssoftware installiert werden, die neben den gerätespezifischen Daten auch die gesamte Trainingshistorie, den aktuellen Leistungsstand, Allzeit-Rekorde und Ausführungsdaten des Benutzers enthält. Durch den Deeplink können alle diese Daten dem Benutzer zur Verfügung gestellt werden.

Die erfindungsgemäßen Komponenten des Systems sind so einander abgestimmt, dass wenn der Benutzer sein Smartphone in bzw. auf die Smartphonehalterung anordnet, auf dem Display des Smartphones gerätespezifischer Inhalt erscheint, ohne dass eine wesentliche Benutzereingabe notwendig ist. Eine unwesentliche Eingabe wie zum Beispiel die Anfrage, welche Cookies vom Benutzer zugelassen werden, ist aber durchaus vorstellbar und in manchen Fällen sogar gesetzlich vorgeschrieben.

Das Übertragungsmittel ist in einem bevorzugten Ausführungsbeispiel ein NFC-Tag (Near Field Communication Tag); weitere geeignete Übertragungsmittel umfassen ohne Beschränkung Bluetooth Low Energy (BLE) Sender, RFID-Tags und optische Identifikationsmittel.

Der Deeplink ist eine spezifische URL, die das Smartphone unmittelbar auf den gerätespezifischen Kontext im Cloud-Server verweist. Der Deeplink kann sowohl den Smartphone-Browser als auch eine dafür konfigurierte App ansprechen. Der Benutzer kann sich einloggen, um auf seine persönlichen Daten wie zum Beispiel den Trainingsplan und seine Trainingshistorie zuzugreifen, oder als Gast lediglich eine Übung auswählen.

In einer Ausführungsform ist die Smartphonehalterung mit dem analogen Fitnessgerät entweder fest installiert oder mit einer (Hilfs-)Konstruktion fest verbunden. Die Position des Smartphones kann beispielsweise durch ein Drehgelenk, einen Schwenkarm oder einen Schwanenhals eingestellt werden.

In einer weiteren Ausführungsform ist die Smartphonehalterung nicht physisch mit dem analogen Fitnessgerät verbunden, sondern nur derart neben dem analogen Fitnessgerät angeordnet, dass es für den Benutzer klar ist, dass die Smartphonehalterung einem bestimmten Fitnessgerät zugeordnet ist. Das kann in der Weise passieren, dass eine Kennzeichnung an der Smartphonehalterung auf das Fitnessgerät hinweist.

In einer weiteren Ausführungsform ist das Smartphone an die Smartphonehalterung mittels eines Klemmmechanismus, eines Magneten oder einer selbsthaftenden Nanofolie befestigt.

Das erfindungsgemäße System kann als analoges Fitnessgerät eine Fitnessvorrichtung mit Steckgewichten, ein Plateloaded Fitnessgerät, ein Seilzug, eine Kurzhantel, eine Langhantel, eine Kettlebell, eine Hartschaumrolle, ein Schwingstab, ein Gummiband, eine Hantelbank, ein Medizinball, ein Gymnastikball oder eine Matte umfassen.

Das erfindungsgemäße System kann eine Vielzahl analoger Fitnessgeräte aufweisen, wie z.B. Fitnessmaschinen für Krafttraining aller Art, Seilzüge, Kurzhanteln, Langhanteln, Kettlebells, Hartschaumrollen, Schwingstäbe, Gummibänder, Hantelbänke, Medizinbälle, Gymnastikbälle und Matten. Allen diesen Geräten ist gemeinsam, dass sie keine eigenen elektronischen Komponenten aufweisen; die gesamte digitale Intelligenz liegt im Cloud-Server, auf den das Smartphone über den Deeplink zugreift.

Die Smartphonehalterung und das analoge Fitnessgerät werden bei dem erfindungsgemäßen System so angeordnet, dass das Smartphone sicher befestigt werden kann und sich während der Ausführung der Übung im Blickfeld des Benutzers befindet.

Das Verfahren gemäß der Erfindung wird so ausgeführt, dass der Benutzer, der eine Fitnessübung ausführen will, zunächst ein analoges Fitnessgerät auswählt, mit dem er die Fitnessübungen durchführen will. Durch das Anbringen seines Smartphones an eine Smartphonehalterung, wird automatisch, das heißt ohne manuelle Eingabe des Benutzers, eine Kommunikation zwischen dem Smartphone und einem Cloud-Server hergestellt. Das geschieht dadurch, dass die Smartphonehalterung ein Übertragungsmittel wie z.B. BLE-Sender, RFID-Tag oder ein NFC-Tag aufweist, das dem Smartphone einen Deeplink übermittelt, wodurch eine auf dem Smartphone befindliche App geöffnet wird oder ein Cloud-Server eine Anfrage an das Smartphone sendet, ob sich der Benutzer einloggen möchte.

Der Cloud-Server kann dann eine Liste der Übungen anzeigen, die mit dem gewählten analogen Fitnessgerät durchgeführt werden können.

Der Benutzer kann eine Übung über das Smartphone-Display auswählen.

Die Erfindung wird nun anhand der Figuren näher erläutert.

### Es zeigt:

Fig. 1: Analoges Fitnessgerät (Beinpresse-Maschine) gemäß dem Stand der Technik.
Fig. 2: Gleiche Maschine gemäß der Erfindung mit Smartphonehalterung und daran angebrachtem Mittel.
Fig. 3: Auf dem Smartphone angezeigte Informationen.
Fig. 4: Ausführungsform mit Hartschaumrolle als analogem Fitnessgerät.
Fig. 5: Smartphonehalterung mit einem NFC-Tag

### Bezugszeichenliste

- 100: Benutzer
- 110: Fitnessgerät gemäß dem Stand der Technik
- 200: Benutzer
- 210: Plateloaded Fitnessgerät Teil des Systems gemäß der Erfindung
- 220: Smartphonehalterung als Teil des Systems gemäß der Erfindung
- 230: Smartphone als Teil des Systems gemäß der Erfindung
- 240: Cloud-Server
- 300: Smartphone als Teil des Systems gemäß der Erfindung
- 310: Display des Smartphones
- 400: Benutzer
- 410: Hartschaumrolle als Teil des Systems gemäß der Erfindung
- 420: Smartphonehalterung als Teil des Systems gemäß der Erfindung
- 430: Smartphone als Teil des Systems gemäß der Erfindung
- 510: Smartphonehalterung
- 520: NFC-Tag
- 530: Befestigungsadapter
- 610: Smartphonehalterung
- 620: NFC-Tag
- 630: Befestigungsadapter

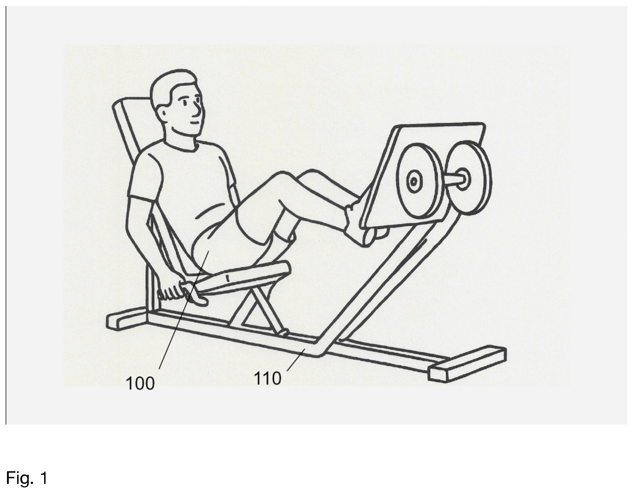

Figur 1 zeigt einen Benutzer **100** in einem klassischen analogen Fitnessgerät gemäß dem Stand der Technik **110**. Beim Training an analogen Geräten sind zahlreiche Aspekte der korrekten Anwendung zu beachten: Vermeidung von Verletzungen und Fehlbelastungen, korrekte Körperposition, Fußstellung, Gelenkwinkel, Bewegungsausmaß, richtige Geräteeinstellungen (Winkel der Rückenlehne, Abstand der Fußplatte) sowie die Bewegungsgeschwindigkeit (Kadenz) und die Intensität (Gewicht und Wiederholungsanzahl).

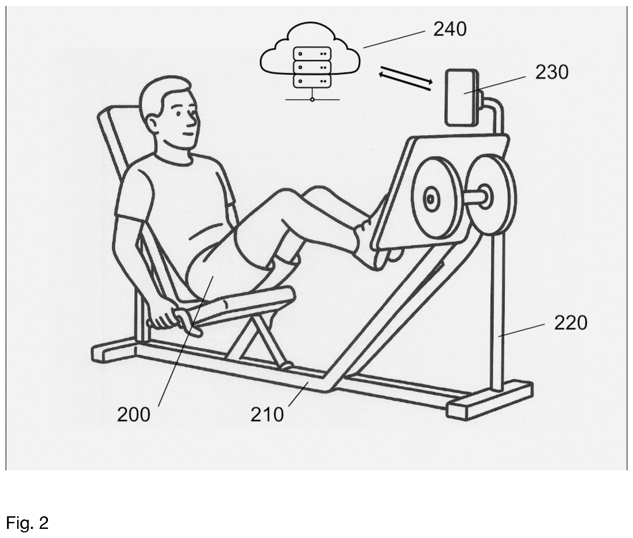

Figur 2 zeigt einen Benutzer **200** an dem Fitnessgerät **210**, das ein Teil des Systems gemäß der Erfindung ist. Durch die im Blickfeld angebrachte Smartphonehalterung **220** mit dem darin befestigten Smartphone **230** erhält der Anwender **200** vor und während der Übungsausführung alle wesentlichen Informationen von dem Cloud-Server **240** für die korrekte Ausführung.

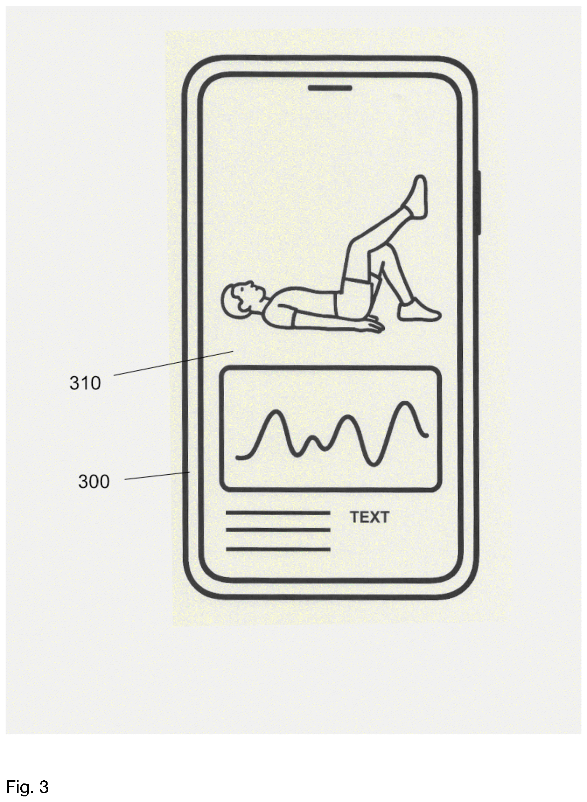

Figur 3 zeigt die auf dem Display **310** des Smartphones **300** angezeigten Informationen: Visualisierung der korrekten Übungsausführung Fotos und Video, Textbeschreibung mit Tipps und möglichen Fehlern. Auch weitere Daten wie aktueller Leistungsstand und Trainingshistorie, Bewegungsgeschwindigkeit (Kadenz) mit Bewegungs- und Pausenphasen, Pausetimer mit akustischem Signal sowie Chat-Funktion für Online-Support durch Trainer oder Studio können vorgesehen werden.

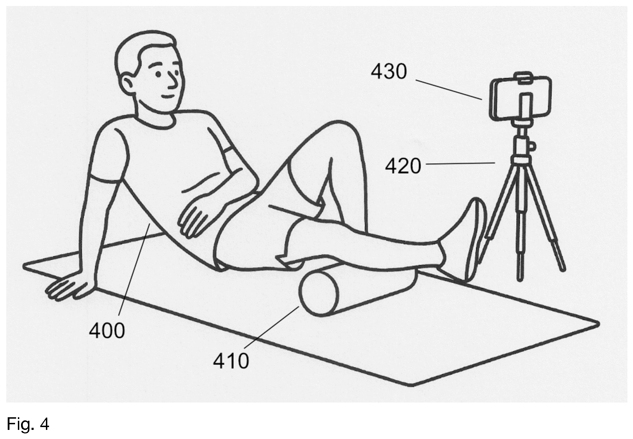

Figur 4 zeigt eine Ausführungsform mit einer Hartschaumrolle als analogem Fitnessgerät **410** als vom Benutzer **400** verwendetes Fitnessgerät **410**. Diese Ausführungsform verdeutlicht, dass die Erfindung nicht auf Geräte mit Steckgewichten beschränkt ist, sondern auch für einfache analoge Hilfsmittel des Fitness- und Rehabilitationsbereichs ohne jegliche eigene Elektronik geeignet ist.

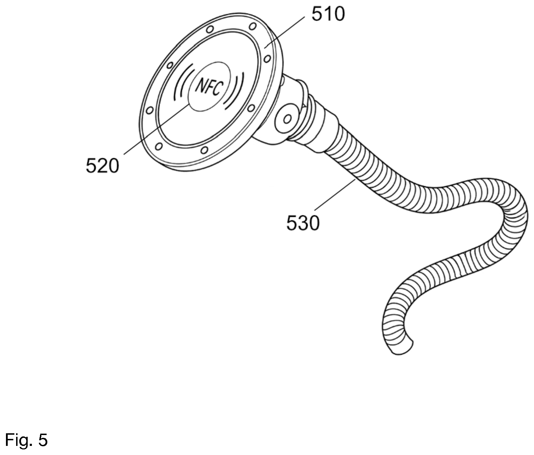

Fig. 5 zeigt eine Smartphonehalterung **530** mit dem darin angeordneten NFC-Tag **520**. Das Smartphone kann hier mittels eines Magnets oder einer selbsthaftenden Nanofolie festgehalten. Der NFC-Tag **520** ist bündig mit der Halteoberfläche **510** angeordnet.

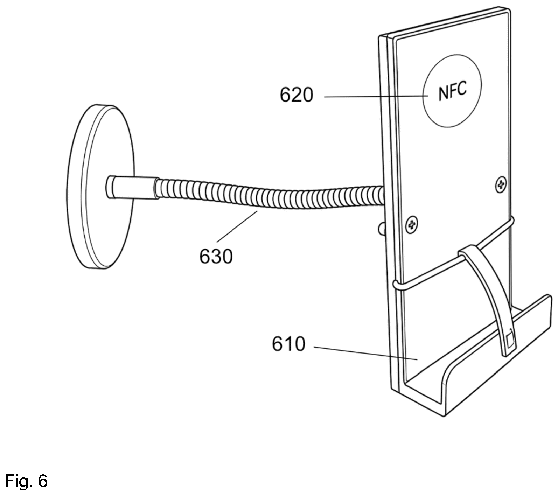

Fig. 6 zeigt eine weitere Ausführungsform für die Smartphonehalterung **630** mit Klemmmechanismus mit dem darin angeordneten NFC-TAG **620**. Auch hier ist der NFC-Tag **620** bündig mit der Halteoberfläche angeordnet.

## Patentansprüche

1. System, umfassend:
a) ein Smartphone (230; 300; 430);
b) eine Smartphonehalterung (220; 420; 500);
c) ein an der Smartphonehalterung angeordnetes Übertragungsmittel,
wobei das Übertragungsmittel dazu eingerichtet ist, bei Unterschreiten einer vorbestimmten Distanz zwischen Smartphone (230; 300; 430) und Smartphonehalterung (220; 420; 500) einen Deeplink an das Smartphone (230; 300; 430) zu übertragen,
d) ein Cloudserver (240) mit den darauf gespeicherten gerätespezifischen Daten
und
e) ein analoges Fitnessgerät, mit dem Fitnessübungen durchgeführt werden,
wobei das analoge Fitnessgerät mit der Smartphonehalterung (220; 420; 500) zusammenwirkt
und
wobei durch das Übertragen des Deeplinks an das Smartphone (230; 300; 430) ohne manuelle Benutzereingabe eine Verbindung zwischen dem Smartphone (230; 300; 430) und dem Cloud-Server (240) initiiert wird.

2. System nach Anspruch 1, wobei die Smartphonehalterung (220; 420; 500) mit dem analogen Fitnessgerät fest verbunden ist.

3. System nach Anspruch 1, wobei die Smartphonehalterung (220; 420; 500) von dem analogen Fitnessgerät getrennt und neben diesem angeordnet ist.

4. System nach einem der Ansprüche 1 bis 3, wobei das Smartphone (230; 300; 430) an die Smartphonehalterung (220; 420; 500) mittels eines Klemmmechanismus, eines Magneten oder einer selbsthaftenden Nanofolie befestigt ist.

5. System nach einem der Ansprüche 1 bis 4, wobei das analoge Fitnessgerät eine Maschine mit Steckgewichten, ein Plateloaded Fitnessgerät (210), ein Seilzug, eine Kurzhantel, eine Langhantel, eine Kettlebell, eine Hartschaumrolle (410), ein Schwingstab, ein Gummiband, eine Hantelbank, ein Medizinball, ein Gymnastikball oder eine Matte ist.

6. System nach einem der Ansprüche 1 bis 5, wobei das Smartphone (230; 300; 430) während der Ausführung der Übung im Blickfeld des Benutzers positioniert ist.

7. System nach einem der Ansprüche 1-6, wobei das Übertragungsmittel als NFC-Tag (520), BLE-Sender, RFID-Tag oder optisches Identifikationsmittel ausgebildet ist.

8. System nach einem der Ansprüche 1 bis 7, wobei die Verbindung zwischen dem Smartphone (230; 300; 430) und dem Cloud-Server über das Internet erfolgt.

9. System nach einem der Ansprüche 1 bis 8, wobei das Smartphone (230; 300; 430) eine Applikation (App) aufweist, die durch den Deeplink geöffnet wird.

10. Verfahren zur Durchführung einer Fitnessübung, umfassend die Schritte:
- Auswählen eines analogen Fitnessgeräts, mit dem die Fitnessübungen durchgeführt werden;
- Anbringen eines Smartphones an eine Smartphonehalterung, die ein Übertragungsmittel aufweist, das dem Smartphone einen Deeplink übermittelt; wobei durch das Anbringen des Smartphones an die Smartphonehalterung automatisch eine Kommunikation zwischen dem Smartphone und einem Cloud-Server hergestellt wird.

11. Verfahren nach Anspruch 10, wobei durch das Anbringen des Smartphones eine auf dem Smartphone befindliche App geöffnet wird.

12. Verfahren nach Anspruch 10 oder 11, wobei der Cloud-Server eine Anfrage an das Smartphone sendet, ob sich der Benutzer einloggen möchte.

13. Verfahren nach einem der Ansprüche 10 bis 12, wobei der Cloud-Server den vorab für den Benutzer erstellten Trainingsplan anzeigt, der mit dem gewählten analogen Fitnessgerät in Verbindung steht.

14. Verfahren nach einem der Ansprüche 10 bis 13, wobei der Cloud-Server eine Liste der Übungen anzeigt, die mit dem gewählten analogen Fitnessgerät durchgeführt werden können.

15. Verfahren nach einem der Ansprüche 10 bis 14, wobei der Benutzer eine Übung über das Smartphone-Display auswählt.

16. Verfahren nach einem der Ansprüche 10 bis 15, wobei die Ausführung der gewählten Übung auf dem Smartphone angezeigt wird.

17. Verfahren nach einem der Ansprüche 10 bis 16, wobei die optimale Ausführungsgeschwindigkeit der Übung durch einen Balken auf dem Display des Smartphones angezeigt wird.

18. Verfahren nach einem der Ansprüche 10 bis 17, wobei der Benutzer Zugriff auf gerätespezifische Einstellungen, die gesamte Trainingshistorie, den aktuellen Leistungsstand, Allzeit-Rekorde und Ausführungsdaten hat.

19. Verfahren nach einem der Ansprüche 10 bis 18, wobei der Benutzer die Wiederholungszahl, das Gewicht, die Dauer, die Wattzahl, die Herzfrequenz, die Geschwindigkeit oder die Kilometerzahl in vorgesehene Felder einträgt.

20. Verfahren nach einem der Ansprüche 10 bis 19, wobei der Cloud-Server eine Anfrage an das Smartphone sendet, ob der Benutzer seine durchgeführten Übungen speichern möchte.

21. Verfahren nach einem der Ansprüche 10 bis 20, wobei das analoge Fitnessgerät eine Fitnessmaschine für Krafttraining, ein Seilzug, eine Kettlebell, ein Gerät für Ausdauertraining, eine Kurzhantel, eine Langhantel, eine Hartschaumrolle, ein Schwingstab, ein Gummiband, eine Hantelbank, ein Medizinball, ein Gymnastikball oder eine Matte ist.

22. Smartphonehalterung, umfassend ein Mittel, das einem Smartphone einen Deeplink übermittelt, sobald das Smartphone und die Smartphonehalterung eine vorbestimmte Distanz unterschreiten, zur Verwendung in dem Verfahren nach einem der Ansprüche 10 bis 21.
